# EUROPEAN PATENT SPECIFICATION

(11) **EP 3 582 620 B1**
(45) Date of publication and mention of the grant of the patent: **14.04.2021**
(21) Application number: 18710137.3
(22) Date of filing: 09.02.2018
(51) Int. Cl.: A22C 17/00, B02C 18/36

(54) **CUTTING DEVICE WITH MONOLITHIC STRUCTURE**
SCHNEIDVORRICHTUNG MIT MONOLITHISCHER STRUKTUR
DISPOSITIF DE COUPE À STRUCTURE MONOLITHIQUE

(30) Priority: 16.02.2017 IT 201700017473
(43) Date of publication of application: 25.12.2019
(73) Proprietor: Quadrana, Marcello, 40069 Zola Predosa (BO) (IT)
(72) Inventor: Quadrana, Marcello, 40069 Zola Predosa (BO) (IT)
(74) Representative: Fiammenghi, Eva
(86) International application number: PCT/IB2018/050809
(87) International publication number: WO 2018/150305

(56) References cited:
- WO-A1-2014/162220
- DE-C- 871 683
- US-A1- 2007 001 040

## Description

### Technical field

The present invention refers to the mechanical industry. More in detail, the present invention refers to a distinctive cutting device to be used in industrial plants suitable for processing animal meat for producing sausages, typically for producing mortadella.

### State of the art

Sausages, and swine cold cuts in general, are currently one of the food-stuffs most produced, sold and bought by consumers worldwide today. Swine cold cuts and in particular sausages, are generally raw or cooked meat-based food-stuffs containing salt, animal fat, spices, preservatives (if any), and that are inserted into closed containers, conventionally consisting in animal intestines. Among the most known and consumed sausages worldwide, mortadella is definitely at the forefront. This pork cold cut is a very ancient food-stuff, probably dating back to the 1st century, but certain production thereof dates back to late middle age, in Italy and the city of Bologna in particular, as proven by various sources including some drawings, paintings and engravings of the day. This pork cold cut is a pink and slightly spiced cylindrical or oval-shaped cooked sausage. Anciently, meat from various animal species including swine, bovine and equine were used for producing mortadella. Given the production difficulty and the length of the process, characteristics that also made it rather costly, it was considered a prestigious product. The technology for producing this pork cold cut has developed a lot over the years and today mortadella is a product exclusively consisting of noble cuts of pork meat and it is prepared following a strict process.

The mortadella production process is known and it is absolutely particular. Modern technology provides for that fresh meat reaches the production plant in separately frozen anatomic pieces of swine. After reaching an ideal temperature for processing thereof, this meat is minced and turned into a creamy emulsion through various stages in special meat mincing machines. Fat cubes measuring about one cubic centimetre and obtained from the neck fat, the hardest and most prestigious fat and from the lard obtained from the back part of the pork, are be prepared separately. The thin emulsion is then mixed with the fat cubes and then mixed with salt, water and spices (or flavours in form of powder or solution). Additives are added subsequently and the mixture thus obtained is stuffed into the casing at the desired amounts. As a matter of fact, mortadella comes with different sizes ranging from 500 g up to more than 100 kg. The casings used for stuffing can be natural or artificial and the latter are usually used for the smaller dimensions. In addition, the sausage is subjected to cooking using special dry air ovens, within times that vary from a few hours up to a whole day depending on the amount and it is important that the internal temperature reaches 70°C. Then their follows sprinkling using cold water and storage in a cooler to stabilise the product. The quality of a sausage, and mortadella specifically, mainly depends on factors such as the quality of the raw material utilised due to the composition thereof, the chemical-physical characteristics and microbiological characteristics, the additives utilised, storage, distribution of the finished product definitely as well as the production technology applied. Though it can be deemed advanced, the latter reveals some drawbacks lying in the need for performing specific process steps by means of components and systems that can - at times - entail problems regarding the damage and early wear of the very components and which often affect the properties of the finished product. More in detail, the rubbing of the cutters or the meat cutting devices against the fixed discs for the extrusion of mortadella often causes the release of metal material with high content of iron and other metals into the product being processed. These cutters are positioned between two fixed extrusion discs, thus generating an alternating sequence of discs and cutters in the cutting unit. The cutters, alongside the support and blades thereof, are arranged so as to have - both in inoperative and operative condition - the upper and lower surfaces arranged at contact with the surfaces of the adjacent extrusion fixed discs. This structural and configuration characteristic causes strong rubbing of the contact surfaces when the plant is running. More in detail, the rubbing occurs in the event of high pressure on the circular surfaces of the elements involved in the process once considerable amount of meat, pressed towards the cutting blades by the auger, passes through. In addition, the pressure that develops is not distributed uniformly over all points of the surfaces but it is higher in proximity of the central areas of said surfaces. The effect of this aspect determines the occurrence of deformations and concavities in the central areas of the surfaces of the fixed discs and cutters. Besides the aforementioned consequences regarding the release of metal material into the product being processed, these deformations trigger the undesired rubbing phenomena between the surfaces of the cutters and the surfaces of the fixed discs.

In order to overcome the aforementioned drawbacks, various solutions have been proposed over the last years, most of which represent the patent application content, (with the applicant in question as the designated inventor) which revealed to be efficient at overcoming the aforementioned drawbacks observed in the processing of the meat, for producing sausages and mortadella in this specific case.

For example, document WO2014188320, describes a cutter holder for a cutting unit of a meat mincing plant. Such cutter holder comprises a central body and a plurality of radial arms extending therefrom. Each radial arm has a pair of V-shaped cutters in which each cutter of the pair has blades that can be adapted to the body of the radial arm due to the insertion thereof into a special groove that ensures the oblique spatial orientation thereof. The blades are held in said orientation due to a threaded pin and they are such to be deformed and folded independently with respect to each other under the effect of the pressure exerted by the meat being processed US patent number 7461804 discloses a monolithic cutting device with a plurality of radial arms, wherein each arm presents a pair of v-shaped cutters.

The solutions outlined above, provided by the devices available in the market and those subject of the various patents existent in this field, reveal drawbacks regarding the sophistication level of the elements that characterise them. In particular these are extremely costly elements which, besides having to be structurally flawless, require frequent maintenance capable of guaranteeing the wholeness thereof and compliance with the model they represent. Otherwise their functionality would be entirely inefficient and require replacement with a new element.

Regarding this, an object of the present industrial invention patent application, described in detail hereinafter, is to provide a new and innovative cutting device provided with a monolithic structure that not only efficiently overcomes the problems described above but that is of easy manufacturing and maintenance while simultaneously keeping the manufacturing costs thereof low.

### Description of the invention

The present invention refers to a new and innovative cutting device that can be used for processing animal meat for the industrial production of sausages and pork cold cuts and, more specifically, for producing mortadella. More in detail, the cutting device 1 subject of the present industrial invention patent application represents one of the components comprised in animal meat processing plants for producing mortadella. Even more specifically, said cutting device represents one of the components that intervene in the step for cutting and extruding/mincing the meat being processed to obtain a mixture subsequently subjected to other processing steps. Given that it is a preferably industrial use, it should be observed that the plants for producing mortadella use a plurality of devices designated for cutting/extruding/mincing meat. Thus, in such type of plant, the device in question is used combined with other identical devices. Specifically, said cutting devices 1 should be arranged coaxially to each other and so as to be spaced out by meat extrusion discs. The surfaces of the extrusion discs and surfaces of the adjacent cutting devices come into contact and when the plant is running, such contact is so consistent under the action of the pressure exerted by the considerable amount of meat that there occurs high frictions leading to unwanted consequences both as regards the characteristics observable in the finished product and as concerns the wholeness of the plant components themselves.

The cutting device subject of the present invention, overcomes the aforementioned drawbacks due to the fact that it is substantially a monolithic metal structure in which the cutters are configured so as to maintain a given flexibility.

The cutting device 1 in question appears as a radial structure in which a plurality of radial arms 5 which reach a perimeter crown 4, circular and concentric to said central hole 3, depart from a central metal body 2, provided with a central hole 3.

Each radial arm 5, preferably seven or comprised between two and twelve in any case, is provided with two pairs of metal supports 6.a-6.a', 6.b-6.b' which extend perpendicularly to the axis of the respective radial arm 5. Advantageously, said metal supports 6.a-6.a', 6.b-6.b' have a preferred thickness of 2 mm, or a thickness comprised between 0.2 mm and 4 mm, which enables said metal supports 6.a-6.a', 6.b-6.b' to have a predetermined flexibility.

Said metal supports 6.a-6.a', 6.b-6.b', are irreversibly constrained to a pair of blades 7-7'. More in detail, a first pair of metal supports 6.a-6.b is suitable to be engaged with a first blade 7 and a second pair of metal supports 6.a'-6.b' is suitable to be engaged with a second blade 7'.

Advantageously, the device in question reveals an elastic behaviour - as concerns the characterising elements thereof, thus the blades 7-7', cutters 4 - under the action of strong mechanical stresses. Thus serving the object of the invention.

Even more in detail, said blades 7-7' are characterised by a rectangular section with dimensions comprised between 1 mm X 3 mm and 8 mm X 16 mm, preferably 4 mm X 8 mm and they are spaced apart by an intermediate space, which enables the free and independent bending thereof, comprised between 1 mm and 7 mm, preferably 3 mm. Advantageously, each component of the cutting device 1, comprised between the blades 7-7', consists of a single stainless steel investment casting. However, there can be a version of the present invention in which said blades 7-7' are centrally provided with an insert 8 made of another metal which has characteristics of greater hardness with respect to the steel forming the other parts of the cutting device 1. In this version, the insert 8 enables even greater resistance of the blades 7-7' and thus the entire cutting device 1, to wear. Preferably, said insert 8 will be made of special steel suitable for handling foodstuffs resistant to friction such as tungsten carbide suitable for handling foodstuffs.

For the sake of comprehension of the present invention, which will be more apparent from the following description of the preferred embodiments and from observing the attached figures, it should be observed that when the meat processing plant is running, the cutting device 1 in question is spatially configured in a manner such that the two blades 7-7' of each radial arm 5 are faced one towards the underlying extrusion disc and the other towards the overlying disc. This spatial configuration of the cutting device 1 is such to contribute to reducing the frictions that arise between the blades 7-7' and the surfaces of the extrusion discs under the considerable pressure of the meat. Advantageously, the intermediate space observable between the two blades 7-7', enables conferring a given degree of "clearance" to said blades 7-7' when subjected to pressure. Thus, when the plant is running said blades 7-7' will tend to come into contact right at the points where they diverge in inoperative condition. Advantageously, the cutting device 1 is made of a material such to elastically respond to the stresses. This offers the advantage lying in the fact that, between all portions of the components subjected to strong direct or indirect mechanical stresses there will be no rubbing such to damage the components and the ensuing release of metal material into the product being processed.

Advantageously, the elastic behaviour of the radial arms 5 enables greater durability of the efficiency of the blades 7-7' over time, in that they will not wear out very easily. Advantageously, the cutting device 1 thus configured, enables repeating normal maintenance and grinding operations for about 6-8 times before losing the efficiency thereof and making the replacement of the piece with a new one a preferable option.

Advantageously, the aforementioned characteristic enables reducing the number of maintenance interventions required normally, thus also meeting the purpose of making the object in question an object capable of rendering the meat mincing process more economic. The cost of the cutting device 1 subject of the present invention, in light of the construction characteristics thereof, amounts to about 1/3 of the cost of the cutting devices currently used in the sausages and minced meat production plants.

The entirety enabling the cutting device 1 in question to considerably efficiently serve the object of the invention.

### Brief description of the drawings

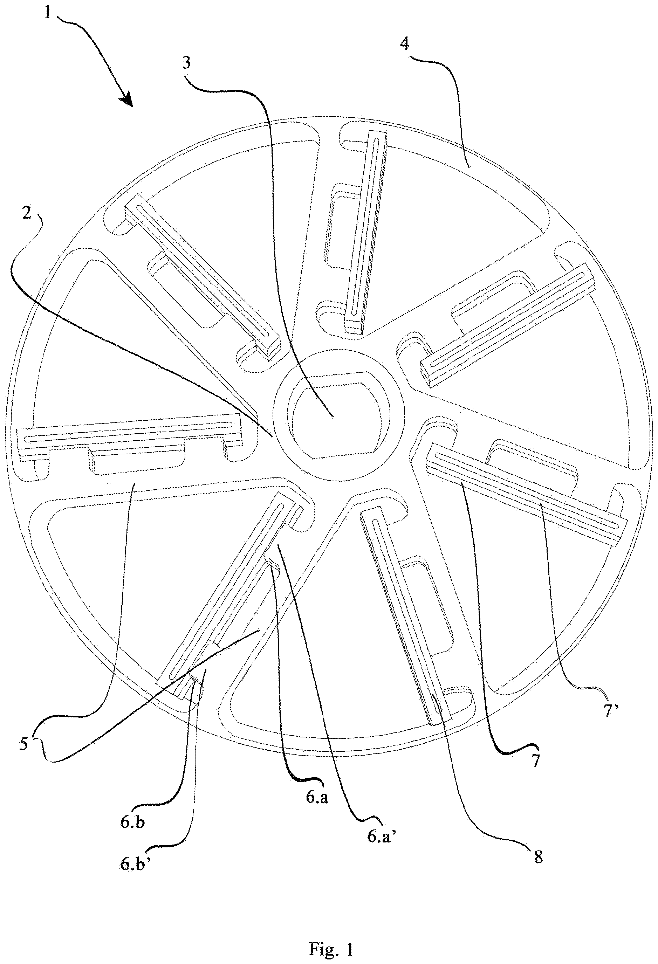

- FIGURE 1 shows a perspective view of the cutting device 1 subject of the present industrial invention patent application. In particular, it shows the metal body 2 from which a plurality of radial arms 5 - which terminate in a perimeter crown 4 - depart. The metal body 2, similarly to the prior art devices, centrally has a hole 3 suitable to enable the rotating central shaft of the plant portion designated for cutting/mincing the meat to pass through. More in detail, each radial arm 5 is provided with two pairs of metal supports 6.a-6.a', 6.b-6.b' which support a pair of blades 7-7'. In this version of the invention, each of them has a central insert 8 made of a different material which adjusts the rigidity thereof.

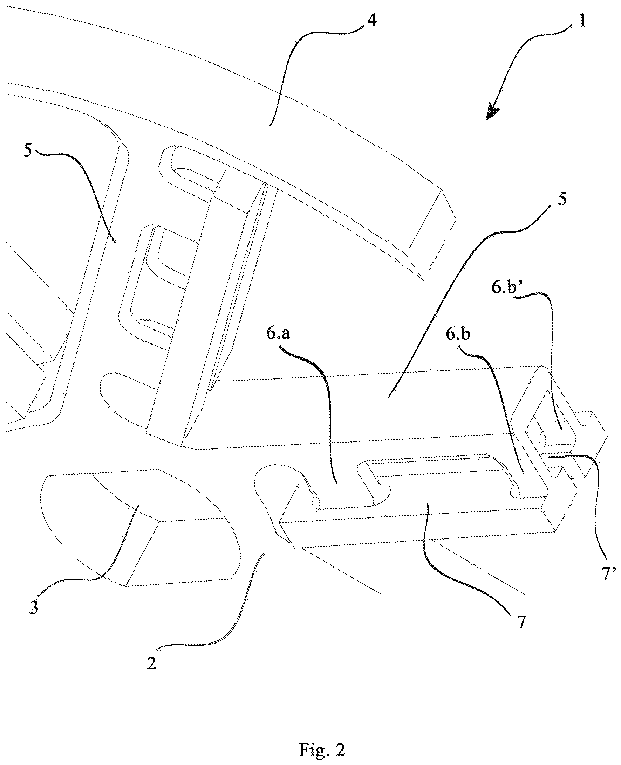

- FIGURE 2 shows a cross-sectional detail of the cutting device 1 in which the geometry of each radial arm 5 consisting of two pairs of metal supports 6.a-6.a', 6.b-6.b' and that of the pair of blades 7-7' can be observed with greater precision.

### Description of the preferred embodiments

In the preferred embodiment thereof, the cutting device 1 subject of the present industrial invention patent application, appears as a radial structure comprising a central metal body 2 from which a plurality of radial arms 5, terminating in a perimeter crown 4, depart. In the preferred embodiment thereof, the cutting device 1 has seven radial arms 5 but devices characterised by a different number of arms 5 comprised between two and twelve, are admissible too.

Similarly, to the prior art cutting devices for the same applications addressed by the present invention, the cutting device 1 has a central hole 3 observable in the metal body 2, suitable for the passage of the rotating shaft of the plant portion designated to cut/mince animal meat. Thus, said cutting devices 1 will be arranged one on the other and spaced out by the extrusion discs used for the aforementioned application.

As previously mentioned, the cutting device 1 in question is characterised in that it consists in a single investment casting of a common metal or metal alloy suitable for the object of the invention, preferably stainless steel, which makes it a monolithic structure. Thanks to this characteristic and the distinctive configuration described in detail hereinafter, the cutting device 1 in question is much more resistant with respect to the prior art cutting devices. As a matter of fact, it enables carrying out normal maintenance and grinding operations, so as to maintain the cutting effect suitably efficient, for about 6-8 times before replacing the piece with a cutting device 1 with the same characteristics. All this maintaining the production costs of the device at about 1/3 with respect to the cost of those already available in the market.

As a matter of fact, said radial arms 5 which support the relative blades 7-7' enable minimising the rubbing of the components involved in the mincing of the meat and maintaining the structure thereof whole over time, thus becoming more resistant to wear or, more precisely, more elastic to stresses.

More in detail, as observable from FIG. 2, two pairs of metal supports 6.a-6.b, 6.a'-6.b' - extending perpendicularly to the axis of the respective radial arm 5 to terminate at the base of said blades 7-7' - are provided on each radial arm 5. Said metal supports 6.a-6.b, 6.a'-6.b' have a preferred thickness of 2 mm, or a thickness comprised between 0.2 mm and 4 mm, which enables said metal supports 6.a-6.b, 6.a'-6.b' and thus said blades 7-7', to have a predetermined flexibility.

In this manner, the two blades 7-7' of each radial arm 5 are free to bend under the consistent pressures exerted by the meat being processed and they do not come into contact in an intermediate space that separates them and which enables them to bend without coming into contact, i.e. without releasing metal material into the minced meat. More in detail, this space will have a preferred width of 3 mm or comprised between 1 mm and 7 mm, depending on the hardness of the meat to be processed through the mincing plant in which the cutting device 1 in question operates. It should be observed that in the plant for producing sausages, mortadella specifically, the cutting devices 1 should be spatially configured so that the two blades 7-7' of each radial arm 5 are faced one towards the overlying extrusion disc and the other towards the underlying disc. Thus, such central interstice enables each pair of blades 7-7' to respond to the mechanical stresses it is subjected to without causing deformations and without the occurrence of rubbing consistent enough to cause the release of metal material into the meat being processed.

In the preferred embodiment, the blades 7-7' are rectangular shaped with 4 mm X 8 mm dimensions, but blades 7-7' with dimensions comprised between 1 mm X 3 mm and 8 mm X 16 mm are admissible too.

Furthermore, in a version of the present invention, each of said blades 7-7' is provided with a central portion characterised by the presence of a metal insert 8 suitable to confer greater rigidity to the blade 7-7' and thus greater durability. Preferably, said insert 8 will be made of tungsten carbide suitable for handling foodstuffs or any other metal or metal alloy commonly available in the market suitable to stiffen the blades 7-7' of the cutting device 1 described up to now.

Lastly, it is clear that the invention described up to now may be subjected to modifications, additions or variants obvious to a man skilled in the art, without departing from the scope of protection outlined by the attached claims.

## Claims

1. Cutting device (1) with monolithic structure for processing animal meat comprising a metal body (2) provided with a central hole (3), suitable to be engaged with the rotating shaft of the meat processing plant in the cutting/mincing step, said metal body (2) being provided with a plurality of radial arms (5) that depart from said metal body (2) up to reaching a perimeter crown (4) concentric to said central hole (3), said cutting device (1) being **characterised in that** each radial arm (5) is provided with at least two pairs of metal supports (6.a-6.b, 6.a'-6.b') that extend perpendicularly with respect to the central axis of the relative radial arm (5), said pairs of metal supports (6.a-6.b, 6.a'-6.b') being suitable to support, fixedly and irreversibly, at least one corresponding pair of rectangular-shaped blades (7-7'); said blades (7-7') being separated by a central space with predetermined width, suitable to confer freedom of movement to the single blades (7-7'), with respect to each other, during the meat cutting/mincing process; said cutting device (1), being constituted by a single investment casting of any metal or metal alloy suitable to confer a predetermined degree of rigidity to the entire monolithic structure that constitutes the cutting device (1); said metal or metal alloy preferably being stainless steel.

2. Cutting device (1) with monolithic structure, according to the preceding claim 1, **characterised in that,** each blade (7-7') is provided, along the longitudinal axis thereof, with an insert (8) made of any metal or metal alloy material suitable to increase the rigidity of each blade (7-7') in a predetermined manner.

3. Cutting device (1) with monolithic structure, according to the preceding claim 2, **characterised in that** said metal insert (8) is made of a tungsten carbide suitable for handling foodstuffs.

4. Cutting device (1) with monolithic structure, according to any one of the preceding claims, **characterised in that** it is provided with a number of radial arms (5) comprised between two and twelve, preferably seven.

5. Cutting device (1) with monolithic structure, according to any one of the preceding claims, **characterised in that** said rectangular-shaped blades (7-7') have dimensions comprised between 1 mm X 3 mm and 8 mm X 16 mm, preferably 4 mm X 8 mm.

6. Cutting device (1) with monolithic structure, according to any one of the preceding claims, **characterised in that** the intermediate space between said blades (7-7') has a thickness comprised between 1 mm and 7 mm, preferably 3 mm.

7. Cutting device (1) with monolithic structure, according to any one of the preceding claims, **characterised in that** said metal supports (6.a-6.b, 6.a'-6.b') extending on each radial arm (5) have a preferred thickness of 2 mm, or a thickness comprised between 0.2 mm and 4 mm.

8. Cutting device (1) with monolithic structure, according to any one of the preceding claims, **characterised in that** it is suitable to withstand maintenance and grinding operations for a number of times comprised between 6 and 8 times before losing the efficiency of said blades (7-7') and require replacement with a another cutting device (1) having the same characteristics.

9. Cutting device (1) with monolithic structure, according to any one of the preceding claims, **characterised in that** it is suitable to be used in sausage production industrial plants, preferably during the cutting/mincing of meat for producing mortadella and various types of salamis.

## Patentansprüche

1. Schneidvorrichtung (1) mit monolithischer Struktur zum Verarbeiten von Tierfleisch, die einen Metallkörper (2) aufweist, der mit einem zentralen Loch (3) versehen ist, das geeignet ist, im Schritt des Schneidens/Zerkleinerns mit der rotierenden Welle der Fleischverarbeitungsanlage in Eingriff gebracht zu werden, wobei der Metallkörper (2) mit mehreren radialen Armen (5) versehen ist, die von dem Metallkörper (2) ausgehen, bis sie eine zu dem zentralen Loch (3) konzentrische Umfangskrone (4) erreichen, wobei die Schneidvorrichtung (1) **dadurch gekennzeichnet ist, dass** jeder radiale Arm (5) mit wenigstens zwei Paaren von Metallträgern (6.a-6.b, 6.a'-6.b') versehen ist, die sich senkrecht in Bezug auf die zentrale Achse des jeweiligen radialen Arms (5) erstrecken, wobei die Paare von Metallträgern (6.a-6.b, 6.a'-6.b') geeignet sind, zumindest ein entsprechendes Paar rechteckförmiger Klingen (7-7') fest und irreversibel zu tragen; wobei die Klingen (7-7') durch einen zentralen Raum mit vorgegebener Weite getrennt sind, der geeignet ist, den einzelnen Klingen (7-7') während des Fleischschneide-/Zerkleinerungsprozesses Bewegungsfreiheit in Bezug zueinander zu verleihen; wobei die Schneidvorrichtung (1) aus einem einzelnen Feingussstück aus einem/einer beliebigen Metall oder Metalllegierung besteht, das geeignet ist, der gesamten monolithischen Struktur, die die Schneidvorrichtung (1) bildet, einen vorgegebenen Grad an Steifigkeit zu verleihen; wobei das Metall oder die Metalllegierung vorzugsweise rostfreier Stahl ist.

2. Schneidvorrichtung (1) mit monolithischer Struktur gemäß dem vorhergehenden Anspruch 1, **dadurch gekennzeichnet, dass** jede Klinge (7-7') entlang ihrer Längsachse mit einem Einsatz (8) aus einem/einer beliebigen Metall oder Metalllegierung versehen ist, der geeignet ist, die Steifigkeit jeder Klinge (7-7') auf eine vorgegebene Weise zu erhöhen.

3. Schneidvorrichtung (1) mit monolithischer Struktur gemäß dem vorhergehenden Anspruch 2, **dadurch gekennzeichnet, dass** der Metalleinsatz (8) aus einem für die Handhabung von Lebensmitteln geeigneten Wolframkarbid gemacht ist.

4. Schneidvorrichtung (1) mit monolithischer Struktur gemäß einem der vorhergehenden Ansprüche, **dadurch gekennzeichnet, dass** sie mit einer Anzahl von radialen Armen (5) versehen ist, die zwischen zwei und zwölf, vorzugsweise sieben, liegt.

5. Schneidvorrichtung (1) mit monolithischer Struktur gemäß einem der vorhergehenden Ansprüche, **dadurch gekennzeichnet, dass** die rechteckförmigen Klingen (7-7') Abmessungen zwischen 1 mm X 3 mm und 8 mm X 16 mm, vorzugsweise 4 mm X 8 mm, aufweisen.

6. Schneidvorrichtung (1) mit monolithischer Struktur gemäß einem der vorangehenden Ansprüche, **dadurch gekennzeichnet, dass** der Zwischenraum zwischen den Klingen (7-7') eine Dicke zwischen 1 mm und 7 mm, vorzugsweise 3 mm, aufweist.

7. Schneidvorrichtung (1) mit monolithischer Struktur gemäß einem der vorhergehenden Ansprüche, **dadurch gekennzeichnet, dass** die sich auf jedem radialen Arm (5) erstreckenden Metallträger (6.a-6.b, 6.a'-6.b') eine bevorzugte Dicke von 2 mm oder eine Dicke zwischen 0,2 mm und 4 mm aufweisen.

8. Schneidvorrichtung (1) mit monolithischer Struktur gemäß einem der vorhergehenden Ansprüche, **dadurch gekennzeichnet, dass** sie geeignet ist, Wartungs- und Schleifvorgängen eine Anzahl von Malen zu widerstehen, die zwischen 6 und 8 Malen liegt, bevor die Wirksamkeit der Klingen (7-7') verloren geht und ein Austausch gegen eine andere Schneidvorrichtung (1) mit denselben Eigenschaften erforderlich ist.

9. Schneidvorrichtung (1) mit monolithischer Struktur gemäß einem der vorhergehenden Ansprüche, **dadurch gekennzeichnet, dass** sie geeignet ist, in industriellen Anlagen zur Wurstherstellung verwendet zu werden, vorzugsweise während des Schneidens/Zerkleinerns von Fleisch zum Herstellen von Mortadella und verschiedener Arten von Salami.

## Revendications

1. Dispositif de coupe (1) à structure monolithique pour traiter de la viande animale comprenant un corps en métal (2) pourvu d'un trou central (3), apte à être engagé avec l'arbre rotatif de l'installation de traitement de viande lors de l'étape de coupe/hachage, ledit corps en métal (2) étant pourvu d'une pluralité de bras radiaux (5) qui partent dudit corps en métal (2) jusqu'à atteindre une couronne périmétrique (4) concentrique audit trou central (3), ledit dispositif de coupe (1) étant **caractérisé en ce que** chaque bras radial (5) est pourvu d'au moins deux paires de supports en métal (6.a-6.b, 6.a'-6.b') qui s'étendent perpendiculairement par rapport à l'axe central du bras radial (5) relatif, lesdites paires de supports en métal (6.a-6.b, 6.a'-6.b') étant aptes à supporter, de manière fixe et irréversible, au moins une paire correspondante de lames de forme rectangulaire (7-7') ; lesdites lames (7-7') étant séparées par un espace central de largeur prédéterminée, apte à conférer une liberté de mouvement aux lames (7-7') uniques les unes par rapport aux autres, pendant le traitement de coupe/hachage de viande ; ledit dispositif de coupe (1) étant constitué par un moulage à modèle perdu de tout métal ou alliage de métal pour conférer un degré prédéterminé de rigidité à la structure monolithique entière qui constitue ledit dispositif de coupe (1) ; ledit métal ou alliage de métal étant de préférence de l'acier inoxydable.

2. Dispositif de coupe (1) à structure monolithique, selon la revendication 1 précédente, **caractérisé en ce que** chaque lame (7-7') est pourvue, le long de son axe longitudinal, d'un insert (8) fait de tout matériau en métal ou alliage de métal apte à accroître la rigidité de chaque lame (7-7') de manière prédéterminée.

3. Dispositif de coupe (1) à structure monolithique, selon la revendication 2 précédente, **caractérisé en ce que** ledit insert (8) est fait d'un carbure de tungstène approprié pour le maniement de denrées alimentaires.

4. Dispositif de coupe (1) à structure monolithique, selon l'une quelconque des revendications précédentes, **caractérisé en ce qu'**il est pourvu d'un nombre de bras radiaux (5) compris entre deux et douze, de préférence sept.

5. Dispositif de coupe (1) à structure monolithique, selon l'une quelconque des revendications précédentes, **caractérisé en ce que** lesdites lames (7-7') de forme rectangulaire ont des dimensions comprises entre 1 mm X 3 mm et 8 mm X 16 mm, de préférence 4 mm X 8 mm.

6. Dispositif de coupe (1) à structure monolithique, selon l'une quelconque des revendications précédentes, **caractérisé en ce que** l'espace intermédiaire entre lesdites lames (7-7') a une épaisseur comprise entre 1 mm et 7 mm, de préférence 3 mm.

7. Dispositif de coupe (1) à structure monolithique, selon l'une quelconque des revendications précédentes, **caractérisé en ce que** lesdits supports en métal (6.a-6.b, 6.a'-6.b') s'étendant sur chaque bras radial (5) ont une épaisseur préférée de 2 mm, ou une épaisseur comprise entre 0,2 mm et 4 mm.

8. Dispositif de coupe (1) à structure monolithique, selon l'une quelconque des revendications précédentes, **caractérisé en ce qu'**il est apte à résister à des opérations de maintenance et d'affûtage un nombre de fois compris entre 6 et 8 fois avant de perdre l'efficacité desdites lames (7-7') et à nécessiter le remplacement par un autre dispositif de coupe (1) ayant les mêmes caractéristiques.

9. Dispositif de coupe (1) à structure monolithique, selon l'une quelconque des revendications précédentes, **caractérisé en ce qu'**il est apte à être utilisé dans des installations industrielles de production de saucisson, de préférence pendant la coupe/hachage de viande pour produire de la mortadelle et divers types de salamis.
